# EUROPÄISCHE PATENTSCHRIFT

(11) **EP 0 795 479 B1**
(45) Veröffentlichungstag und Bekanntmachung des Hinweises auf die Patenterteilung: **12.07.2000**
(21) Anmeldenummer: 96118337.3
(22) Anmeldetag: 15.11.1996
(51) Int. Cl.: B65D 1/32, B65D 23/08, B29C 47/04

(54) **Behälter aus Kunststoff und Verfahren zur Herstellung eines Behälters**
Plastic container and method of manufacturing such a container
Récipient en matière plastique et procédé de fabrication d'un tel récipient

(30) Priorität: 15.03.1996 DE 19610194
(43) Veröffentlichungstag der Anmeldung: 17.09.1997
(73) Patentinhaber: Wella Aktiengesellschaft, 64274 Darmstadt (DE)
(72) Erfinder: Burghaus, Johannes, 64372 Ober-Ramstadt (DE); Nachtsheim, Markus, 64285 Darmstadt (DE); Mecks, Gernot, 64739 Höchst (DE); Steinmetz, Uwe, 64297 Darmstadt (DE)

(56) Entgegenhaltungen:
- EP-A- 0 061 522
- EP-A- 0 385 942
- DE-A- 1 923 860
- DE-U- 9 215 868
- FR-A- 2 647 090
- GB-A- 887 635
- US-A- 3 257 482

## Beschreibung

Die Erfindung betrifft einerseits einen Behälter aus Kunststoff mit einer Wandung aus flexiblem Material, einem zum manuellen Eindrücken der Wandung vorgesehenen Bereich der Wandung, einer Produktabgabeöffung und einer den Behälter zumindest teilweise bedeckenden Dekorierung gemäß den Oberbegriff des Anspruchs 1. Andererseits betrifft die Erfindung ein Verfahren zur Herstellung eines solchen Behälters, wobei der Behälter mittels Extrusionstechnik aus thermoplastischem Kunststoff geformt wird.

Behälter der beschriebenen Art sind hinlänglich bekannt, zum Beispiel in Form von Lotion oder Shampoo enthaltenden Kunststoffflaschen. Die Dekorierung dient einer Produktinformation. Eine Dekorierung kann auf den Behälter geklebt oder thermoplastisch mit ihm verbunden werden. Durch manuelles Eindrücken der Wandung, im Allgemeinen gegen die Mitte des Behälters, wird eine Produktportion aus der Produktabgabeöffnung gespendet.

Derartige Behälter werden mittels Extrusionstechnik aus thermoplastischem Kunststoff hergestellt.

Aus der DE-U 9215868 ist ein Behälter mit einer Wandung aus Kunststoff bekannt, an dem ein Bereich zum manuellen Eindrücken der Wandung vorgesehen ist, um eine Produktportion aus dem Behälter zu spenden. Der Behälter weist eine Dekorierung mit einer Aussparung auf. Die Aussparung ist am eindrückbaren Bereich vorgesehen.

Aus der EP 0 385 942 A ist ein im Extrusionsverfahren hergestellter Behälter bekannt, der einen längsverlaufenden Abschnitt aus einem relativ harten Material und einen längsverlaufenden Abschnitt aus einem relativ weichen Material aufweist, um den Behälter einerseits stabil auszuführen und ihn andererseits leicht eindrücken zu können.

Der aus der DE-U 9215868 bekannte Behälter hat den Nachteil, daß der Bereich nicht sehr leicht eingedrückt werden kann. Der Behälter der EP 0 385 942 hat den Nachteil, daß das längs den Behälter durchsetzende, relativ weiche Material bei relativ hohen Behältern zu einer Unstabilität des Behälters führt.

Der Erfindung liegt die Aufgabe zu Grunde, einen sehr leicht eindrückbaren Behälter der eingangs beschriebenen Art derart auszugestalten, daß bei hoher Festigkeit des Behälters eine gute Knaustschfähigkeit für eine Produktabgabe gegeben ist. Zudem soll ein Verfahren zur Herstellung eines derartigen Behälters gefunden werden.

Gelöst ist die Aufgabe gemäß den Ansprüchen 1 und 5. Der erfindungsgemäße Behälter (Anspruch 1), dessen Dekorierung eine Aussparung aufweist, welche an dem manuell eindrückbaren Bereich der Wandung vorgesehen ist, hat den Bereich aus einem weicheren Material als die an den Bereich angrenzende Wandung, und der Bereich hat entweder die Form eines um die Mittelachse des Behälters ringförmig umlaufenden, geschlossenen Bandes oder die Form einer Kreisfläche.

Beim erfindungsgemäßen Verfahren (Anspruch 5) werden mittels sequentieller Coextrusion ein leichter deformierbarer, weicherer Bereich und eine an den Bereich angrenzende, härtere Wandung des Behälters erzeugt, wobei zwei Extruder unterschiedlich weiche Thermoplaste an eine Ringdüse liefern, und die Ringdüse zeitabhängig betrieben wird, sowie anschließend der Behälter mittels einer eine Aussparung aufweisenden Dekorierung derart versehen wird, daß ein Teil des Bereichs oder der Bereich deckungsgleich mit der Aussparung ist.

Der erfindungsgemäße Behälter hat den Vorteil, daß er bei hoher Festigkeit eine gute Knautschfähigkeit für eine Produktabgabe aufweist. Die gute Knautschfähigkeit wird durch den für die Deformierung vorgesehenen Bereich erreicht. Dort ist infolge des Fehlens der Dekorierung die Kraft zum Deformieren verringert. Die hohe Festigkeit wird dadurch erreicht, daß die Dekorierung den Bereich umgibt.
Das erfindungsgemäße Verfahren erlaubt die Herstellung eines aus zwei verschiedenen Kunststoffen bestehenden Behälters, wobei der eine Kunststoff weicher und leichter deformierbar ist und den zu deformierenden Bereich bildet, und der andere Kunststoff härter ist und dem Behälter eine hohe Festigkeit gibt. Die Festigkeit wird noch von der Dekorierung unterstützt.

Der Bereich des Behälters weist eine höhere Deformierbarkeit auf als die an den Bereich angrenzende Wandung, so daß eine Produktabgabe bei manueller Deformierung des Bereichs erleichtert und die angrenzende Wandung auf Grund ihrer geringeren Deformierbarkeit relativ stabil ist.

Die gute Deformierbarkeit des Bereichs wird durch die Ausgestaltung des Bereichs mit einem weicheren Material erreicht. Mittels zwei Extrudern und sequentieller Coextrusion kann ein Bereich aus einem weicheren Material in eine ansonsten härtere Wandung eingesetzt werden.

Eine gute Deformation des Bereichs und eine gute Stabilität des gesamten Behälters wird durch geeignete Kunststoffauswahl erreicht. Als Material für den zu deformierenden Bereich eignet sich ein thermoplastisches Elastomer und für die an den Bereich angrenzende Wandung ein härterer Kunststoff. Als härterer Kunststoff können PE, PP oder PET verwendet werden. Für den Bereich sind Elastomere auf EPDM-, SEBS- oder SBS-Basis besonders geeignet, aber auch andere Elastomere sind einsetzbar, wie zum Beispiel Nitrilkautschuk, Buthylkautschuk, PVC (weich), NR oder TPU.

Hat der Bereich des Behälters die Form eines um die Mittelachse umlaufenden, geschlossenen Bandes, so kann dieses Band durch kurzzeitigen Einsatz eines zweiten Kunststoffes mit sequentieller Coextrusion erzeugt werden.

Die Stabilität des Behälters ist optimiert, wenn der Bereich die Form einer Kreisfläche hat. Die Kreisfläche genügt der Anforderung, auf diese Fläche einen manuellen Druck auszuüben. Die Fläche ist minimiert und von stabilisierendem, härterem Kunststoff umgeben. Analog dazu ist es sinnvoll, die Aussparung in der Dekorierung rund auszugestalten.

Ein kreisförmiger Bereich kann mittels sequentieller Coextrusion erzeugt werden, wenn die Exruder hierzu programmgesteuert betrieben werden. Das Programm steuert die zeitgenaue Abgabe des Kunststoffes aus der Ringdüse zur Erzeugung des kreisförmigen Bereichs.

Im folgenden wird die Erfindung anhand von Ausführungsbeispiele darstellenden Figuren näher beschrieben. Es zeigt:

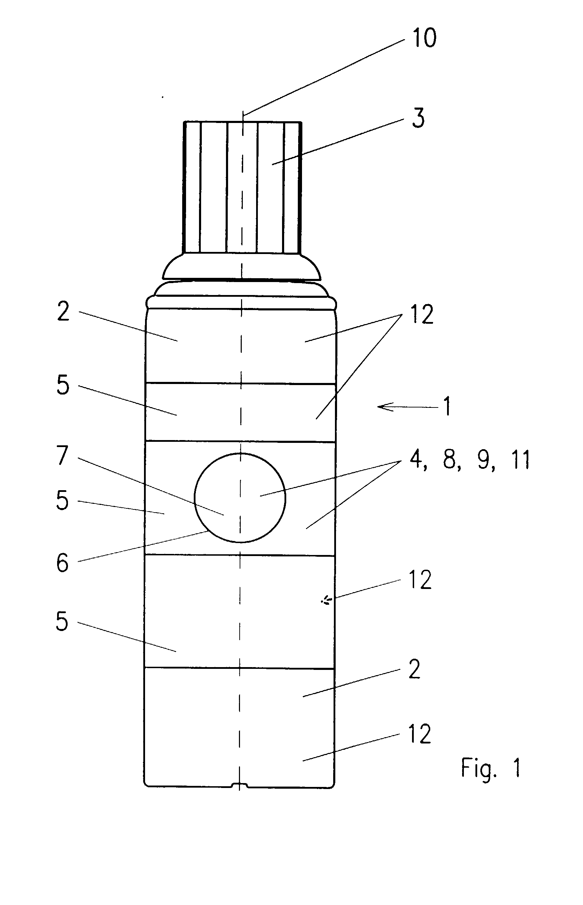

- Figur 1: in einer Seitenansicht einen Behälter, der mit einer Dekorierung ummantelt ist, wobei die Dekorierung eine runde Aussparung aufweist, der Behälter einen ringförmig umlaufenden, bandförmigen Bereich aus einem weicheren Kunststoff als der restliche Behälter hat, und die Aussparung eine kreisscheibenförmige Fläche dieses Bereichs freiläßt, sowie

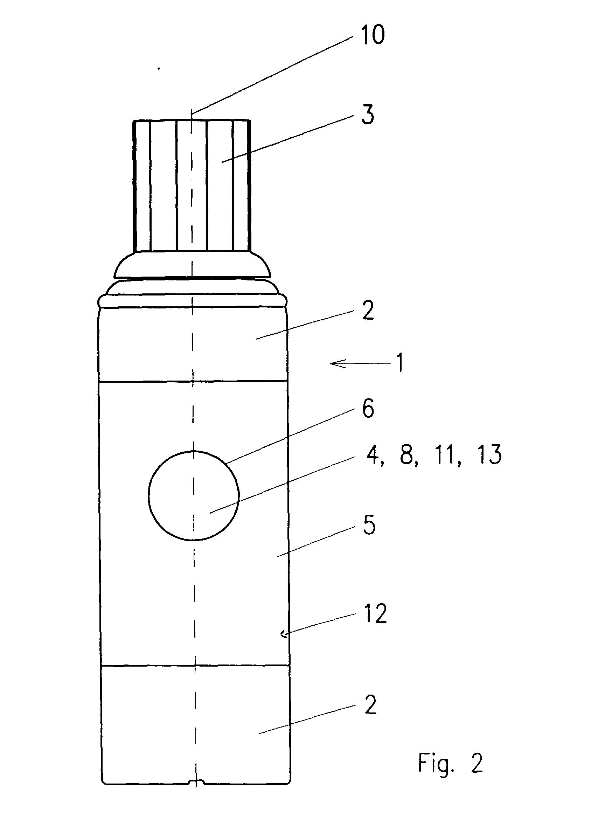

- Figur 2: in einer Seitenansicht einen Behälter analog Figur 1, jedoch mit einem runden, mittels sequentieller Coextrusion erzeugten Bereich aus einem weicheren Kunststoff als der restliche Behälter, wobei der Bereich von der Dekorierung freigelassen ist.

Ein Behälter 1 aus Kunststoff hat eine zylindrische Wandung 2 und ist an seiner (zeichnerisch nicht dargestellten) Produktabgabeöffnung mittels eines Schraubverschlusses 3 verschlossen (Figur 1).

Die Wandung 2 weist einen zum manuellen Eindrücken vorgesehenen, in Form eines geschlossenen Bandes 9 um die Mittelachse 10 umlaufenden Bereich 4 auf. Der Behälter 1 ist von einer Dekorierung 5 ummantelt, die auf die zylindrische Wandung 2 aufgeklebt ist. Die Dekorierung 5 ist einteilig, umlaufend und weist eine Aussparung 6 auf. Die runde Aussparung 6 läßt eine runde Fläche 7 des Bereichs 4 frei. Der Bereich 4 weist eine höhere Deformierbarkeit auf als die an den Bereich 4 angrenzende Wandung 2. Er besteht aus einem weicheren Material 8 als der restliche Behälter 1. Das weichere Material 8 ist ein thermoplastisches Elastomer 11. Die an den Bereich 4 angrenzende Wandung 2 besteht aus einem härteren Kunststoff 12.

Das Elastomer 11 wurde auf EPDM-Basis erzeugt. Durch die Aussparung 6 in der Dekorierung 5 drückt ein Verbraucher gegen die runde Fläche 7, um bei kopfstehendem Behälter 1 eine Produktportion aus dem Behälter 1 zu entnehmen. Die Aussparung 6 kann in einer beliebigen Position auf dem umlaufenden, leicht deformierbaren Bereich 4 vorgesehen werden. Die Dekorierung 5 verbessert die Stabilität des Behälters 1, insbesondere am Bereich 4.

Beim Ausführungsbeispiel der Figur 2 ist als einziger Unterschied zum Behälter 1 der Figur 1 der Bereich 4 nicht als umlaufendes Band 9, sondern in Form einer Kreisfläche 13 ausgestaltet. Durch den verhältnismäßig kleinen Bereich 4 ist die Stabilität des Behälters 1 weiter erhöht. Der kreisförmige Bereich 4 besteht aus einem weicheren Material 8 als der restliche Behälter 1, der aus härterem Kunststoff 12 geformt wurde.

Die Behälter der Figuren 1 und 2 wurden mittels sequentieller Coextrusion aus jeweils zwei unterschiedlich weichen, thermoplastischen Kunststoffen geformt. Dabei werden aus zwei Extrudern unterschiedlich weiche Thermoplaste an eine Ringdüse geliefert, und die Ringdüse wird derart zweitabhängig betrieben, daß aus dem weicheren Thermoplast der weichere, leichter deformierbare Bereich 4 und aus dem härteren Thermoplast die restliche, härtere Wandung 12 entsteht.

Die Kreisfläche 13 des Behälters 1 nach Figur 2 wird dabei mittels eines programmgesteuerten Betriebs der Extruder erzeugt.

Ein derart gefertigter Behälter 1 wird schließlich mit der Dekorierung 5 derart umgeben, daß ein Teil des Bereichs 4 (Figur 1) oder der gesamte Bereich 4 (Figur 2) innerhalb der Aussparung 6 liegt. Es wäre auch möglich, daß die Kreisfläche 13 etwas kleiner als die Fläche der Aussparung 6 ist.

### Bezugszeichenliste

- 1: Behälter
- 2: Wandung
- 3: Schraubverschluß
- 4: Bereich
- 5: Dekorierung
- 6: Aussparung
- 7: runde Fläche
- 8: weicheres Material
- 9: Band
- 10: Mittelachse
- 11: Elastomer
- 12: härterer Kunststoff
- 13: Kreisfläche

## Patentansprüche

1. Behälter (1) mit einer Wandung (2) aus Kunststoff, wobei die Wandung (2) zum manuellen Eindrücken vorgesehen ist, mit einer Produktabgabeöffnung, einer den Behälter (1) zumindest teilweise bedeckenden Dekorierung (5), wobei die Dekorierung (5) eine Aussparung (6) aufweist, und die Aussparung (6) an einem manuell eindrückbaren Bereich (4) der Wandung (2) vorgesehen ist, dadurch gekennzeichnet, daß der Bereich (4) aus einem weicheren Material (8) besteht als die an den Bereich (4) angrenzende Wandung (2), und daß der Bereich (4) entweder die Form eines um die Mittelachse (10) des Behälters (1) ringförmig umlaufenden, geschlossenen Bandes (9) oder die Form einer Kreisfläche (13) hat.

2. Behälter nach Anspruch 1, dadurch gekennzeichnet, daß der Bereich (4) aus einem thermoplatischen Elastomer (11) und die an den Bereich (4) angrenzende Wandung (2) aus einem härteren Kunststoff (12) besteht.

3. Behälter nach Anspruch 2, dadurch gekennzeichnet, daß das Elastomer (11) ein Elastomer (11) auf EPDM-, SEBS- oder SBS-Basis ist.

4. Behälter nach Anspruch 1, Anspruch 2 oder Anspruch 3, dadurch gekennzeichnet, daß die Aussparung (6) rund ist.

5. Verfahren zur Herstellung eines Behälters nach Anspruch 1, wobei der Behälter mittels Extrusionstechnik aus thermoplastischem Kunststoff geformt wird, wobei ein leichter deformierbarer, weicherer Bereich (4) und eine an den Bereich (4) angrenzende, härtere Wandung (2) des Behälters (1) mittels sequentieller Coextrusion erzeugt werden, wobei zwei Extruder unterschiedlich weiche Thermoplaste an eine Ringdüse liefern, und die Ringdüse zeitabhängig betrieben wird, und der Behälter (1) anschließend mittels einer eine Aussparung (6) aufweisenden Dekorierung (5) derart versehen wird, daß ein Teil des Bereichs (4) oder der Bereich (4) deckungsgleich mit der Aussparung (6) ist.

6. Verfahren nach Anspruch 5, dadurch gekennzeichnet, daß die Extruder für die Erzeugung eines Bereichs (4) in Form einer Kreisfläche (13) programmgesteuert werden.

## Claims

1. A plastics container (1) comprising a wall (2) intended for manual squeezing, a product dispensing opening and a decoration (5) at least partially covering the container (1), the decoration (5) having a cut-out (6) provided in a manually squeezable region (4) of the wall (2), characterised in that the region (4) comprises a softer material (8) than the wall (2) adjacent to the region (4), and in that the region (4) is either in the form of a closed band (9) extending round the central axis (10) of the container (1) in an annular manner, or is in the form of a circular area (13).

2. A container according to claim 1, characterised in that the region (4) comprises a thermoplastic elastomer (11), and the wall (2) adjacent to the region (4) comprises a harder plastics material (12).

3. A container according to claim 2, characterised in that the elastomer (11) is an EPDM, SEBS or SBS based elastomer (11).

4. A container according to claim 1, claim 2 or claim 3, characterised in that the cut-out (6) is round.

5. A method of manufacturing a container according to claim 1, wherein the container is formed from thermoplastic material by extrusion, wherein a more easily deformable, softer region (4) and a harder wall (2) of the container (1) adjacent to the region (4) are produced by sequential co-extrusion, wherein two extruders supply thermoplastics of differing softness to a tubular die, and the tubular die is operated time-dependently, and the container (1) is then provided with a decoration (5) having a cut-out (6) so that the region (4) or part of the region (4) is aligned with the cut-out (6).

6. A method according to claim 5, characterised in that the extruders for producing a region (4) in the form of a circular area (13) are program-controlled.

## Revendications

1. Récipient (1) présentant une paroi (2) en matière plastique, la paroi (2) étant prévue pour être enfoncée manuellement, présentant une ouverture de distribution de produit, une décoration (5) qui recouvre au moins partiellement le récipient (1), la décoration (5) présentant une réserve (6), et la réserve (6) étant prévue dans une zone (4) à enfoncer manuellement de la paroi (2), caractérisé en ce que la zone (4) est faite d'un matériau (8) plus souple que la paroi (2) adjacente à la zone (4) et en ce que la zone (4) a la forme soit d'une bande (9) fermée qui entoure en anneau l'axe médian (10) du récipient (1), soit d'une surface circulaire (13).

2. Récipient selon la revendication 1, caractérisé en ce que la zone (4) est réalisée dans un élastomère thermoplastique (11) et la paroi (2), adjacente à la zone (4), dans une matière plastique (12) plus dure.

3. Récipient selon la revendication 2, caractérisé en ce que l'élastomère (11) est un élastomère (11) à base de EPDM, SEBS ou SBS.

4. Récipient selon la revendication 1, la revendication 2 ou la revendication 3, caractérisé en ce que la réserve (6) est ronde.

5. Procédé de fabrication d'un récipient selon la revendication 1, dans lequel le récipient est formé par extrusion dans une matière thermoplastique, dans lequel une zone (4) plus souple, plus facilement déformable et une paroi (2), plus dure adjacente à la zone (4), du récipient (1), sont produites par co-extrusion séquentielle, deux extrudeuses fournissant deux matières thermoplastiques souples différentes à une filière annulaire qui travaille en fonction du temps et le récipient (1) étant pourvu ensuite d'un décor (5) présentant une réserve (6) de manière qu'une partie de la zone (4) ou la zone (4) coïncide avec la réserve (6).

6. Procédé selon la revendication 5, caractérisé en ce que les extrudeuses destinées à produire une zone (4) sous la forme d'une surface circulaire (13), sont commandées de manière programmée.
